# EUROPEAN PATENT APPLICATION

(11) **EP 4 663 573 A1**
(43) Date of publication of application: **17.12.2025**
(21) Application number: 25182607.9
(22) Date of filing: 13.06.2025
(51) Int. Cl.: B65D 65/46, A47J 31/06, A47J 31/36, B65D 85/804

(54) **A CELLULOSE-FIBER-BASED CAPSULE WITH A SEMI-PERMEABLE SUBSTANTIALLY RIGID INTEGRALLY MADE CELLULOSE-FIBER-BASED MATERIAL SIDE WALL AND BASE WALL ACT AS A POROUS STRUCTURE LIQUID-DIFFUSER**

(30) Priority: 13.06.2024 NL 2037940
(71) Applicant: Euro-Caps Holding B.V., 3044 CE Rotterdam (NL)
(72) Inventor: KAY, Anthony, 3044 CE ROTTERDAM (NL); HELD, Micha Alexander, 3044 CE ROTTERDAM (NL); HABRAKEN, Else, 3044 CE ROTTERDAM (NL)
(74) Representative: EP&C

(57) **Abstract**

A cellulose-fiber-based capsule (C) has a cup-like capsule body (CB) of which a side wall (SW), base wall (BW) and flange (F) are integrally made out of a same cellulose-fiber-based material, wherein the integrally made cellulose-fiber-based material side wall (SW), base wall (BW) and flange (F) are substantially rigid in order for the capsule body (CB) to remain shape prior to insertion in the beverage production machine. According to the invention the substantially rigid integrally made cellulose-fiber-based material side wall (SW) and base wall (BW) are semi-permeable for pressurized liquid to pass through them while retaining substance in order for the side wall (SW) and base wall (BW) to act as a liquid-diffuser for the pressurized liquid to permeate through the side wall (SW) and base wall (BW) into the substance in the capsule (C).

## Description

### FIELD OF THE INVENTION

The present invention relates to capsules for containing a substance from which beverages can be produced and that are designed for insertion in a beverage production machine in which pressurized liquid enters the capsule in order to interact with the substance in the capsule and to drain a beverage from the capsule.

### BACKGROUND TO THE INVENTION

Such capsules are known in a wide variety of embodiments, and typically comprise a cup-like capsule body with a circumferential side wall, a transverse base wall at a first end of the side wall, and a radially outwardly protruding flange encircling the side wall at its second end.

A system which is widely known as the Nespresso (Registered Trade Mark) system uses aluminium capsules that contain the substance from which the beverage is produced. The substance initially was ground coffee but subsequently capsules containing other substances such as milk powder, hot chocolate and tea have been introduced.

Nespresso capsules each have a substantially rigid frustoconical side wall, a substantially rigid transverse base wall at a smaller diameter end of the side wall, and a substantially rigid outwardly projecting flange which encircles the side wall at its wider diameter end. During manufacturing, the capsule is filled with the substance through its wider end and then closed by a foil closure disc that is adhered to the flange.

A beverage production machine which is used with these capsules comprises a structure for positioning the capsule in a cavity of the machine. A longitudinal centre axis of the capsule then extends horizontally and the flange lies in a vertical plane. A cylindrical pressing sleeve of the machine, in use, gets pushed with a leading end against a back surface of the flange which faces towards the smaller end of the capsule. At a same time the sleeve then presses the foil closure disc against a profiled back plate. Three piercers penetrate the capsule through the base wall as the sleeve moves forward to press on the flange, allowing pressurized hot liquid to enter the capsule.

The liquid is injected into the capsule at a pressure of, for example, 15-19 Bar, and is heated to a temperature, of for example, 95-98 degrees Celsius. The foil closure disc has supported areas which lie against raised zones of the back plate, and has unsupported areas which span across depressions in the back plate. The quickly rising liquid pressure inside the capsule acting on these unsupported areas causes them to burst permitting the beverage to flow out of the capsule through outlet openings which have thus been formed in the foil closure disc.

For a proper and save operation it is essential that there is a liquid tight seal between the leading end of the pressing sleeve of the beverage production machine and the capsule. If this seal is inadequate, hot pressurized liquid flows between the leading end of the sleeve and the flange. This can result in a not high enough pressure building up inside the capsule for the foil closure disc to burst, which means that beverage extraction fails. It can also result in the volume of beverage produced being reduced as liquid by-passes the capsule and flows into for example a drip tray. More dangerously however this then can also result in escaping hot pressurized liquid getting spouted against a consumer who then may get burns. In order to prevent this, such an aluminium capsule may have its flange equipped with a distinctive sealing ring, like for example a rubber-elastic resilient sealing ring.

A disadvantage with those aluminium capsules however is that the environmental friendliness leaves to be desired.

The same disadvantage goes for plastic capsules.

At present millions and millions of those traditional aluminium and plastic capsules get consumed each day worldwide, most of which end up in waste processing facilities where the capsules get burned, including the sealing rings made of another material than the aluminium and plastic materials of the capsule bodies themselves.

As an alternative for aluminium and plastic capsules, biodegradable capsules have been developed, like ones that have their capsule body partly made out of compostable cellulose fiber-based materials with some kind of biodegradable plastic liner added as oxygen barrier thereto. The oxygen barrier liner is needed to keep the substance inside the capsule, like coffee powder, fresh for a long period of time, and to be able to withstand the high liquid pressure that occurs inside the beverage production machine.

For this type of cellulose fiber-based capsule with plastic oxygen barrier liner to properly function during a brewing operation it is crucial that the cup-like capsule body at the start of a brewing cycle gets pierced by piercers at its aimed entrance area for creating entrance openings when a sleeve of the brewing chamber of the beverage production machine moves forward. This is necessary to allowing pressurized hot liquid to enter into the capsule.

This piercing however is difficult in present machines because the piercers thereof are specifically designed for piercing through aluminium, and for that are designed with relative wide obtuse-angled triangular-shaped metal piercer heads. This type of 'blunt' piercers however is way less suitable to pierce through cellulose fiber-based material layers of biodegradable capsules, because those materials tend to make the base wall and side wall of the capsule body prone to have a tendency to deform inward together with the piercers rather than be pierced by them. This tendency to deform inwards is even worsened due to the fact that the cellulose fiber-based materials immediately start to absorb liquid as soon as this liquid starts entering the brewing chamber via the piercers and thus also gets in direct contact with the outside surface of the base wall and side wall.

For those piercing problems special measures need to be taken.

For example WO-2023/051967 discloses a capsule of which the cup-like capsule body has been integrally made out of a wood-pulp-based material, starting with a wet forming process followed by heating and pressing in a mould to set the material and remove water therefrom. Subsequently a caramelised sugar or starch coating can be applied to the wood-pulp-based material capsule body to close pores/interstices between the fibres. A biodegradable plastic liner then gets applied against the inner side of the capsule body to give the capsule body its oxygen barrier function during storage and enough strength to withstand the high pressures during brewing. Thus the capsule-body consists for 82% of cellulose-fibers. Together with the biodegradable plastic liner, this makes this capsule home-compostable.

In order to deal with piercing problems it is foreseen in WO-2023/051967 to include a specially treated ring-shaped perforation region at a transition between the base wall and the side wall of the capsule body. The wood-pulp-based material has been locally treated there, for example by pressing or heat treatment, in order to make the perforation region locally stronger and thus easier pierceable by the piercers. Secondly, V-shaped channelled interspaced wall portions are provided as stiffeners along the transition between the base wall and the side wall in order to further stiffen the capsule body there and help it to resist inward deformation when the perforation region is to be pierced by the piercers of the machine.

Those special measures however make this home-compostable capsule relative expensive (10% more expensive than aluminium capsules) and difficult to manufacture.

Another even more important disadvantage is that the capsule is unable to meet the more stringent requirements for industrial-compostability. Consumers therefore are not allowed to throw them in the green waste bin for vegetable, fruit and garden waste (VFG). Since only a few people presently have home-composting facilities, this means that still most of those capsules shall end up in waste processing facilities where the capsules get burned.

Further it is noted that the piercing can create uneven holes, leading to inconsistent wetting of the substance inside the capsule, like ground coffee, and a phenomenon known as "channelling", where the injected pressurized liquid, like water, flows through paths of least resistance through the substance, resulting in poor extraction.

WO-2023/072999 discloses another example of a biodegradable capsule of which the cup-like capsule body comprises an outer cellulose-pulp layer and an inner biodegradable plastic liner. Here also the problem is mentioned that for known paper-based capsules it can happen that, when the piercers try to pierce the capsule body, the aimed entrance area, and often the entire cup-shaped capsule body, does not retain its shape and for example collapses inwards. In order to prevent this, it is foreseen in WO-2023/072999 to ultrasonically stiffen the cellulose pulp at the location of the aimed entrance area in order to improve the ability of the aimed entrance area to be pierced by the piercers.

A disadvantage hereof is that the ultrasonic treatment makes this capsule relative expensive to manufacture.

Further it is noted that the oxygen barrier liner is rather complex, in that it preferably is built up out of no less than five layers, that is to say an outermost polymer protective layer, a first polyolefin tie layer, a polymer barrier layer, a polyolefin tie layer, and an innermost polymeric protective layer. This oxygen barrier liner is more difficult to compost, and the biodegrading again shall be limited to home-composting, resulting in most of those capsules still having to end up in waste processing facilities to get burned.

### BRIEF DESCRIPTION OF THE INVENTION

The present invention aims to overcome those disadvantages at least partly or to provide a usable alternative. In particular the present invention aims to provide an economic cellulose-fiber-based capsule of a both home- and industrial-compostable type of which the durability and functionality during brewing are improved.

According to the present invention this aim is achieved by a cellulose-fiber-based capsule for containing a substance, like ground coffee, from which a beverage can be produced, the capsule being designed for insertion in a beverage production machine in which pressurized liquid, like water, enters the capsule in order to interact with the substance in the capsule and to drain a beverage from the capsule, comprising:
- a cup-like capsule body that comprises:
   ∘ a circumferential side wall;
   ∘ a transverse base wall at a first end of the side wall; and
   ∘ a radially outwardly protruding flange encircling the circumferential side wall at its second end,
      wherein the side wall, base wall and flange are integrally made out of a same cellulose-fiber-based material,
      wherein the integrally made cellulose-fiber-based material side wall, base wall and flange are substantially rigid for the capsule body to remain shape prior to insertion in the beverage production machine.
According to the inventive thought the substantially rigid integrally made cellulose-fiber-based material side wall and base wall are semi-permeable for the pressurized liquid to pass through them while retaining the substance in order for the side wall and base wall to act as a liquid-diffuser for the pressurized liquid to permeate through the side wall and base wall into the substance in the capsule.

Thus, the present invention for the first time advantageously is able to provide a cellulose-fiber-based capsule that is truly both home- and industrial-compostable. A rather complex multi-layered oxygen barrier liner deteriorating the composting process is no longer needed. Instead the capsule body can now be entirely made out of well-compostable cellulose-fiber-based materials. Thus the capsule is also well able to meet the more stringent requirements for industrial-compostability. Consumers may now truly feel free to throw the cellulose-fiber-based capsules in the green waste bin for vegetable, fruit and garden waste (VFG) such that they can get industrially-composted instead of being incinerated.

When pressurized liquid, like water, is introduced into the brewing chamber of a beverage production machine during a brewing cycle, it can diffuse evenly through the semi-permeable side wall and back wall, ensuring uniform wetting of the substance, like ground. This uniform wetting improves extraction efficiency and flavor consistency. This invention thus eliminates the need for piercing the capsule at the beginning of a brewing cycle, thereby preventing uneven hole sizes to arise in the base wall and reducing the phenomenon known as "channelling". The injected pressurized liquid, like water, now flows through and along al substance, resulting in superb extraction results adding positively to the flavor and taste of the produced beverage.

Advantageously no special strengthening measures need to be taken for the base wall and side wall in order to make a piercing thereof possible. Instead it is now even purposively desired that such strengthening measures for the semi-permeable integrally made cellulose-fiber-based material side wall and base wall are not taken all, such that they do not get pierced at all. Thus advantageous use can now be made of the effect that the presently available beverage production machines have relative 'blunt' wide obtuse-angled triangular-shaped metal piercer heads such that they have a tendency to deform the semi-permeable integrally made cellulose-fiber-based material side wall and base wall inward together with the piercers rather than be pierced by them. This tendency to deform inwards instead of getting pierced is even improved due to the fact that the integrally made cellulose-fiber-based material side wall and base wall are now specifically configured to be semi-permeable and thus to get soaked as soon as the pressurized liquid starts entering the brewing chamber via the piercers.

It is noted that because the side wall and base wall are designed semi-permeable to retain the substance inside the capsule body and because no holes are pierced in the side wall and base wall for the substance to escape through, the beverage production machine stays cleaner during brewing cycles.

Owing to the fact that substantially the entire capsule body can now integrally be made out of the same cellulose-fiber-based material, and owing to the fact that no complex plastic liner needs to be coated to an inner side of the cellulose-fiber-based layer, and owing to the fact that the capsule body no longer needs to be pierced at the start of a brewing cycle and thus no longer needs specific constructional strengthening measures, the home-compostable capsule according to the invention can be manufactured not only as being well-compostable but also rather economic and easy.

In a preferred embodiment, the semi-permeable substantially rigid integrally made cellulose-fiber-based material side wall, base wall and flange can be integrally made out of pulp, in particular paper-pulp. The capsule body then for example can be integrally made by means of wet forming out of pulp, in particular paper-based pulp, followed by one or more heat pressing steps.

In a preferred embodiment hereof, during the wet forming manufacturing step, the cellulose-fiber-based pulp material is initially wet-formed into the desired capsule-body shape. In the subsequent first heat press manufacturing step, the capsule body then undergoes an initial heat press to set its basic shape and structure and significantly reduce the amount of water in the shaped wet pulp. In a subsequent second heat press manufacturing step, the capsule body is subjected to a second heat press at a higher temperature and pressure, for example to start formation of finer geometry utilizing specific moulds. This step also further decreases the moisture content in the capsule body. Then in a final heat press manufacturing step it can be ensured that the geometrical features are well-defined and the cellulose-fiber-based pulp material is thoroughly dried and hardened. This type of manufacturing process has appeared well able to compact and densify the side wall and base wall to exactly that level that they need to simultaneously obtain the foreseen semi-permeable characteristics as well as the foreseen substantially rigid characteristics. This ensures the following benefits:
- Structural Integrity: The relative large layer thickness of the moulded cellulose-fiber-based pulp material side wall and base wall creates sufficiently firmness for the capsule to remain shape during storage and handling prior to insertion in the beverage production machine, as well as for the capsule's base wall to remain sufficiently deformable and sturdy to not get pierced by piercers, without needing some kind of support frame out of another type of material.
- Liquid Permeability: The design effectively has the liquid evenly permeate all around from out of various directions through the moulded cellulose-fiber-based pulp material semi-permeable circumferential side wall and through the base wall, causing the brewing quality and time to be improved.
- Reliable Ejection: With improved rigidity, the moulded cellulose-fiber-based pulp material capsule can be reliably ejected from the brewing chamber without sticking.
- Eco-Friendly: Constructed from moulded cellulose-fiber-based pulp material, the capsule offers an environmentally friendly alternative to traditional materials.

The desired degree of local compacting to achieve the desired rigidity and semi-permeability can easily be integrated in one or more of the heat pressing steps when the entire cellulose-fiber-based capsule body is manufactured by means of the wet-forming process followed by the multi-stage heat pressing technique. The cellulose-fiber-based material of the side wall and base wall as well as of the flange then can all be wet formed out the pulp with a uniform layer thickness, be heat pressed in a first step at a substantially same level of compacting, and then in a second and/or third step be heat pressed such that at least the side wall and base wall get compacted to the desired rigidity and semi-permeability level.

In a preferred further embodiment or in the alternative, the semi-permeable substantially rigid integrally made cellulose-fiber-based material side wall and base wall may have a wall thickness of between 0.5-1 mm, in particular about 0.75 mm. This has proven to work well in terms of liquid permeation rate and rigidity even if after some time during a brewing cycle the side wall and base wall have become soaking wet.

In a preferred further embodiment or in the alternative, the semi-permeable substantially rigid integrally made cellulose-fiber-based material side wall and base wall can further be configured to act as a filter for the pressurized liquid during permeating thereof through the side wall and base wall into the substance in the capsule. This advantageously may filter out any contaminations or strange particles that may be present in the injected liquid, like for example be present in tap water in some countries.

In a preferred further embodiment or in the alternative, the cellulose-fiber-based material flange may comprise a radially inner ring-shaped sealing flange region, wherein at least the sealing flange region then may have same properties as the semi-permeable substantially rigid integrally made cellulose-fiber-based material base wall and side wall. The cellulose-fiber-based material at the location of the sealing flange region then can advantageously be compacted to a same thickness and density as the semi-permeable substantially rigid integrally made cellulose-fiber-based material side wall and base wall. In practical tests it has appeared that the thicknesses and density properties needed for making the side wall and base wall semi-permeable and rigid, can advantageously be kept substantially the same to obtain good sealing of the thus dimensioned sealing flange region with the pressing sleeve of the brewing chamber. The cellulose-fiber-based material of the side wall and base wall as well as of the sealing flange region then can all be heat pressed at a substantially same level of compacting, which further helps to simplify the manufacturing process.

In a preferred further embodiment or in the alternative, a foil closure disc can be directly adhered against a front surface of the substantially rigid integrally made cellulose-fiber-based material flange, in particular by means of a compostable hotmelt. No plastic liner or the like needs to lie in between them. This adds to the strength with which the foil closure disc can be connected to the flange, which in turn helps to form a neatly distributed pattern of outlet openings to be formed in the foil closure disc when liquid arrives inside the capsule at a pressure of, for example, 15-19 Bar, and is heated to a temperature, of for example, 95-98 degrees Celsius.

The foil closure disc then advantageously can also be made out of cellulose-fiber-based material, in particular paper, more in particular filter paper.

In a preferred further embodiment or in the alternative, the base wall and/or side wall, in particular at least the base wall and possibly also an upper part of the side wall that lie farthest away from the outlet openings in the closure disc at the bottom, can be equipped with one or more target permeation areas that are each configured for the pressurized liquid to more easily permeate through compared to through the rest of the walls. This makes it advantageously possible to automatically create one or more preferential flow paths for the pressurized liquid to start flowing through the substance contained inside the capsule.

Those target permeation areas for example can be formed by wall portions of locally reduced wall thickness or that are less densified. Preferably, the cellulose-fiber-based material at the location of the target permeation areas may have a reduced thickness or lesser degree of densification of at least 25%, in particular at least 50%, compared to the thickness or density of the cellulose-fiber-based material of the rest of the base and side walls around those target permeation areas. Thus the walls can be designed with one or more easier permeable areas than the neighbouring areas in order to obtain preferred liquid entrance(s) there. This is an economic way to obtain the target permeation areas of which the liquid permeation properties can reliably be mastered and fine-tuned to a required level. Preferably, a symmetric pattern of the target permeation area(s) can thus be provided in the base wall. For example this symmetric pattern can be formed by one or more ring-shaped target permeation areas, or by one or more series of wedge-sector-shaped target permeation areas, or by one or more series of dot-shaped target permeation areas, lying at possibly differing diameters, substantially equally divided around a central axis of the capsule. By the target permeation area(s) being equally/symmetrically divided/spread out over the base wall, the injected pressurized liquid, like water, may also start flowing equally/symmetrically divided/spread out through the substance underneath the base wall. Furthermore, since the target permeation area(s) in the base wall lie farthest away from outlet openings in the closure disc at the opposing bottom of the capsule, it can thus also be promoted that the injected pressurized water gets to interact with substantially all substance inside the capsule, instead of taking short cuts through the walls and the substance towards those outlet openings.

The invention also relates to a manufacturing method according to claims 12, as well as to a beverage production assembly according to claim 13, and to a beverage production method according to claim 14 and 15.

Further preferred embodiments of the invention are stated in the dependent subclaims.

### DETAILED DESCRIPTION OF THE DRAWINGS

The invention shall now be explained in more detail below by means of describing some exemplary embodiments in a non-limiting way with reference to the accompanying drawings, in which:
- Fig. 1a-b show photographs of an embodiment of the cellulose-fiber-based capsule according to the invention;
- Fig. 2a-c show a perspective, partial cross-sectional and enlarged partial cross-sectional view of the capsule of fig. 1;
- Fig. 2d shows a cross-sectional view of the entire capsule of fig. 1 when placed inside a pressing sleeve of a commonly used beverage production machine;
- Fig. 3a-d show schematic views of the capsule of fig. 2 during various stages of a brewing cycle inside a beverage production machine;- Fig. 4a-c show schematic enlarged partial views shortly before closing of a pressing sleeve of the brewing chamber, a starting of liquid injection in the closed brewing chamber, and the liquid permeating through the capsule side wall and base wall and extracted beverage flowing out through a perforated foil closure disc during a brewing cycle;
- Fig. 5a-b show enlarged partial cross-sectional views of fig. 3 just preceding respectively after closing of the pressing sleeve;
- Fig. 6a and 6b show a cross-sectional and bottom view of a first variant embodiment of the capsule of which the base wall is equipped with a ring-shaped target permeation area of reduced wall thickness;
- Fig. 7 shows a bottom view photograph of an embodiment of the cellulose-fiber-based capsule according to the first variant of fig. 6;
- Fig. 8 shows a partial cross-sectional view of a second variant embodiment of the capsule of which the base wall is equipped with a plurality of wedge-sector-shaped target permeation areas of reduced wall thickness;
- Fig. 9 shows a bottom view photograph of an embodiment of the cellulose-fiber-based capsule according to the second variant of fig. 8; and
- Fig. 10a and 10b show bottom and top view photographs of a third variant embodiment of the capsule of which the base wall is equipped with a large number of dot-shaped target permeation areas of reduced wall thickness.

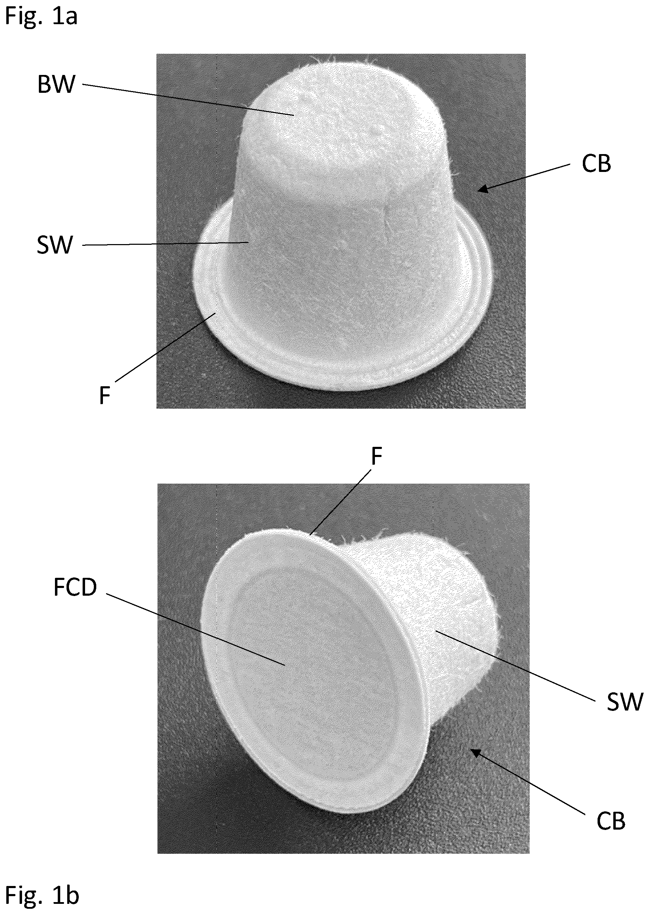

In fig. 1 two capsules are shown. Each capsule comprises a paper-pulp material capsule body CB filled with a substance S and closed by a paper filter material foil closure disc FCD. The capsule body CB comprises a circumferential side wall SW, a transverse base wall BW, and a radially outwardly protruding flange F. The side wall, SW, base wall BW and flange F are integrally made out of the paper-pulp.

The integrally made paper-pulp side wall, base wall and flange are substantially rigid, with which it is meant that the capsule body is well able to remain shape prior to insertion in a beverage production machine.

The foil closure disc FCD is made out flexible thin filter paper.

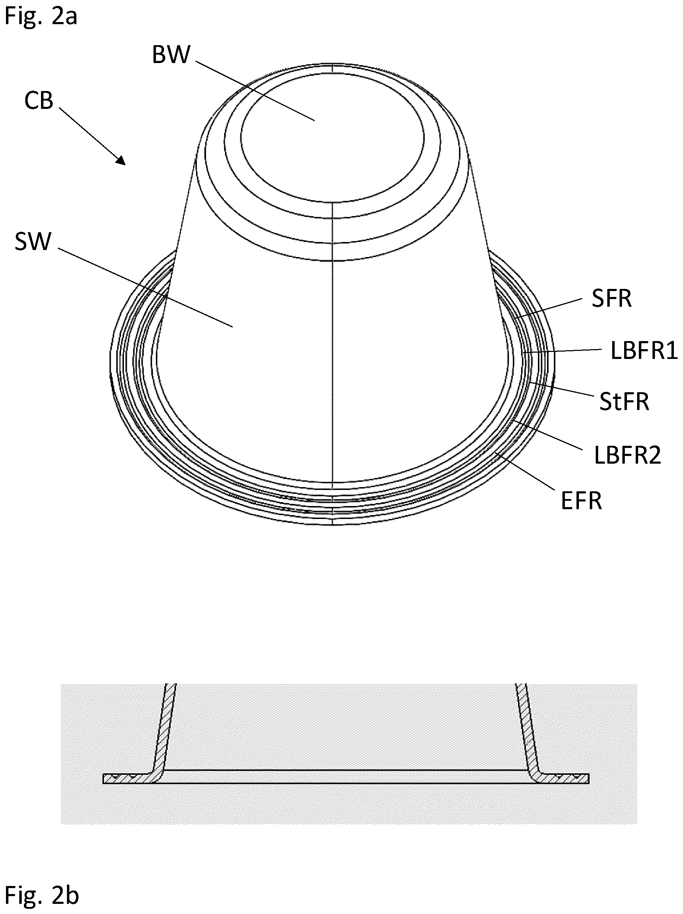

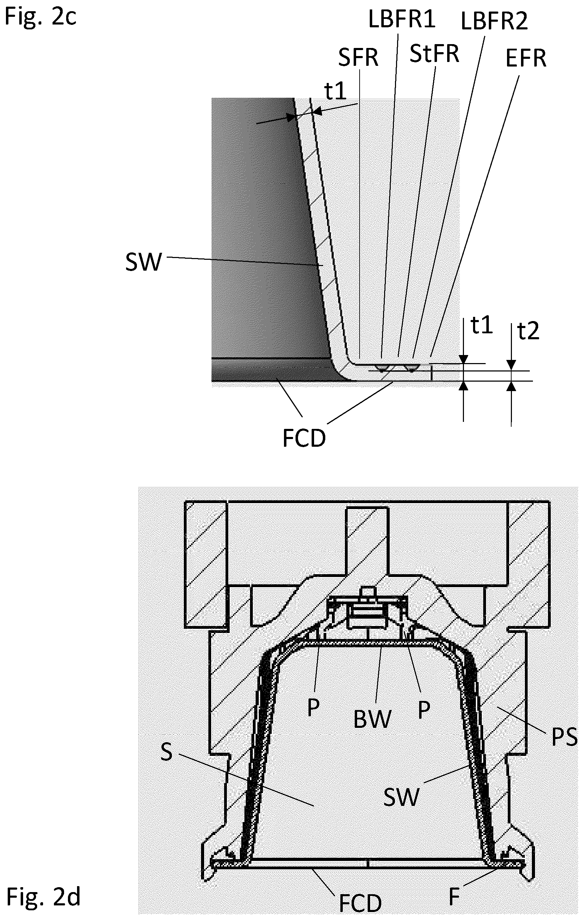

At the locations of the side wall SW and base wall BW, the paper-pulp layer that forms the side wall SW and base wall BW has been compacted to a thickness t1 of about 0.75 mm with relative low density of the cellulose fibers. See fig. 2.

The paper-pulp flange F comprises distinctive concentric ring-shaped regions where the paper-pulp layer that forms the flange F has been compacted to varying thicknesses t1, t2:
- a sealing flange region SFR compacted to the thickness t1 with relative low density of the cellulose fibers;
- a first liquid-barrier flange region LBFR1 compacted to a thickness t2 of about 0.45 mm with relative high density of the cellulose fibers;
- a strengthening flange region StFR compacted to the thickness t1 with relative low density of the cellulose fibers;
- a second liquid-barrier flange region LBFR2 compacted to the thickness t2 with relative high density of the cellulose fibers; and
- an edge flange region EFR compacted to the thickness t1 with relative low density of the cellulose fibers.

For obtaining those different degrees of compacting, a manufacturing method is used that starts with a wet forming step in which a layer of wet paper-pulp is suctioned against an upper mould that has been lowered into a bath filled with the wet paper pulp. The upper mould has a shape complementary to the capsule body CB with flat-faced back surface for the flange. The layer of wet-paper pulp sucked against the upper mould is uniform for the entire capsule body CB.

Subsequently the upper mould is raised out of the bath, moved sideways to be positioned above a lower mould. The lower mould has a shape complementary to the capsule body CB with flat-faced front surface for the flange. The upper mould together with the layer of wet-paper pulp hanging underneath it and the lower mould are moved towards each other to a closed position in which a first heat pressing step is performed on the layer of wet paper-pulp. During this first heat pressing step, the moulds are heated and the layer of wet paper-pulp gets compressed between the two moulds. During this a large amount of the water inside the layer of wet paper-pulp gets pressed out of and evaporates out of the paper-pulp layer. For this, the moulds have been equipped with exit openings for the water to escape. The entire capsule body CB, still with entirely flat-faced front and back surfaces for the flange F gets compressed to a same degree during this first heat pressing step.

Subsequently the upper and lower moulds are moved away from each other to an open position. The upper mould then can be moved empty back to a position above the bath to start a new manufacturing cycle. The lower mould carries the compressed capsule body CB, still with entirely flat-faced front and back surfaces for the flange F.

Subsequently a new type of upper mould takes the place This new type of upper mould has a shape complementary to the capsule body CB now including annular ridges at the location of the liquid-barrier flange regions to be formed. The lower mould together with the compressed capsule body CB, still with entirely flat-faced front and back surfaces for the flange F, and the new type of upper mould are moved towards each other to a closed position in which a second heat pressing step is performed on the compressed capsule body CB. During this second heat pressing step, the moulds are heated and the compressed capsule body CB gets compressed again between the two moulds. During this some extra water gets pressed out and evaporates out of the paper-pulp layer. This time however the liquid-barrier flange regions LBFR get extra compressed to a larger degree due to the presence of the annular ridges in the upper mould. For this, the moulds have been equipped with exit openings for the water to escape. The rest of the capsule body CB, that is to say the side wall SW, base wall BW and other regions of the flange F get compressed to a same but somewhat lower degree during this second heat pressing step.

This process gets repeated for a third heat pressing step to be performed, then with a new lower mould. The paper-pulp capsule body CB at the end is not coated at its inner side with some kind of biodegradable plastic oxygen barrier liner.

The result of this integrally manufacturing by means of the wet forming and heat pressing steps out of the wet paper-pulp one the one hand is that the side wall SW, base wall BW and flange F are substantially rigid, whereas on the other hand the side wall SW and base wall BW are semi-permeable. Furthermore, the result is that the sealing flange region SFR is compressible and has such liquid absorption properties that it is able to swell. The relative low density of the sealing flange region SFR causes it to be well compressible when a pressing sleeve PS of a beverage production machine BPM gets pressed against it at a beginning of a brewing cycle, resulting in a good sealing effect with the pressing sleeve PS. Furthermore, the relative low density of the sealing flange region SFR causes it to be well able to absorb some of the pressurized liquid that gets injected into a brewing chamber BC of the beverage production machine BPM during a brewing cycle, due to which it may swell somewhat while improving the sealing action with pressing sleeve PS. In contrast thereto the liquid-barrier flange regions LBFR1, LBFR2 are hardly compressible if not to say largely incompressible and have such liquid absorption properties that they are hardly able to absorb or transfer pressurized liquid, while the edge flange region EFR is relative thick and strong.

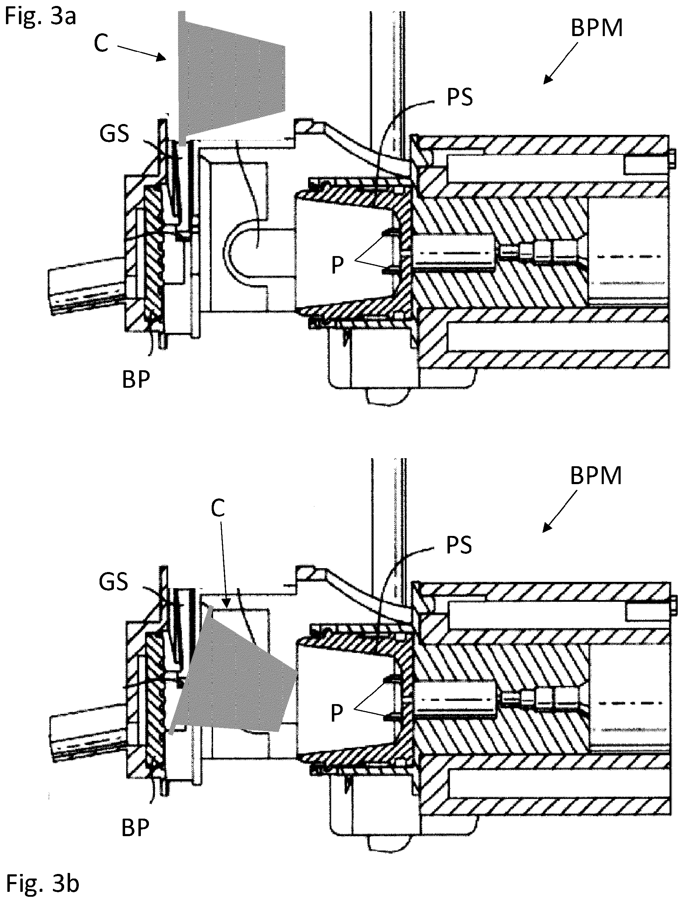

Fig. 3a schematically shows part of a beverage production machine BPM which comprises guiding slits GS for positioning the capsule C in a cavity in between a pressing sleeve PS and a profiled back plate BP of the machine. A longitudinal centre axis of the capsule C in fig. 3a extends horizontally and the flange F lies in a vertical plane. The pressing sleeve PS defines a hollow shape that is somewhat oversized but substantially complementary-shaped to the one of the side wall SW and base wall BW. Inside the pressing sleeve PS piercers P are provided that project a few mm into the hollow shape.

Fig. 3b shows that the capsule C has dropped down into the cavity. The capsule C then shall remain hanging slanted downwards with a front portion of its flange lying against the back plate BP.

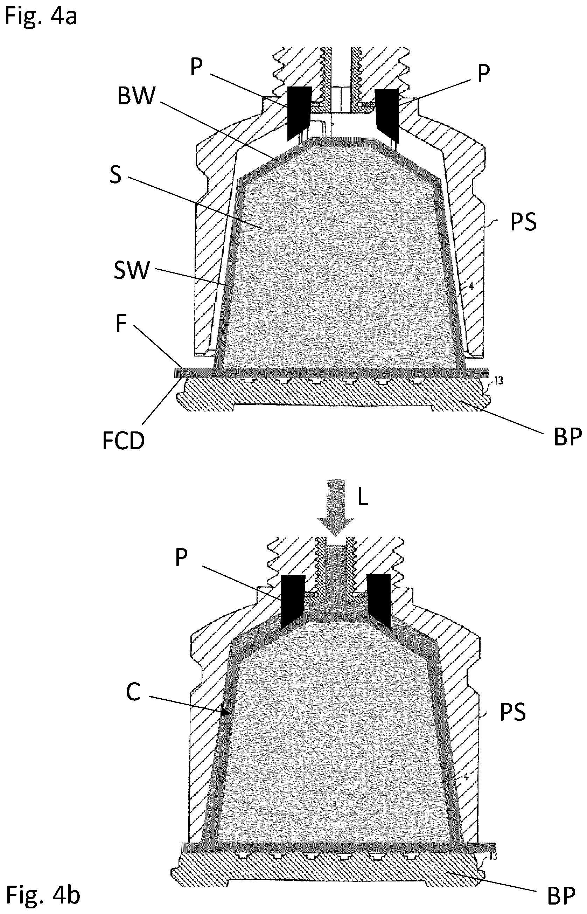

The pressing sleeve PS together with piercers P then may get pushed towards the back plate BP. See also fig. 4a.

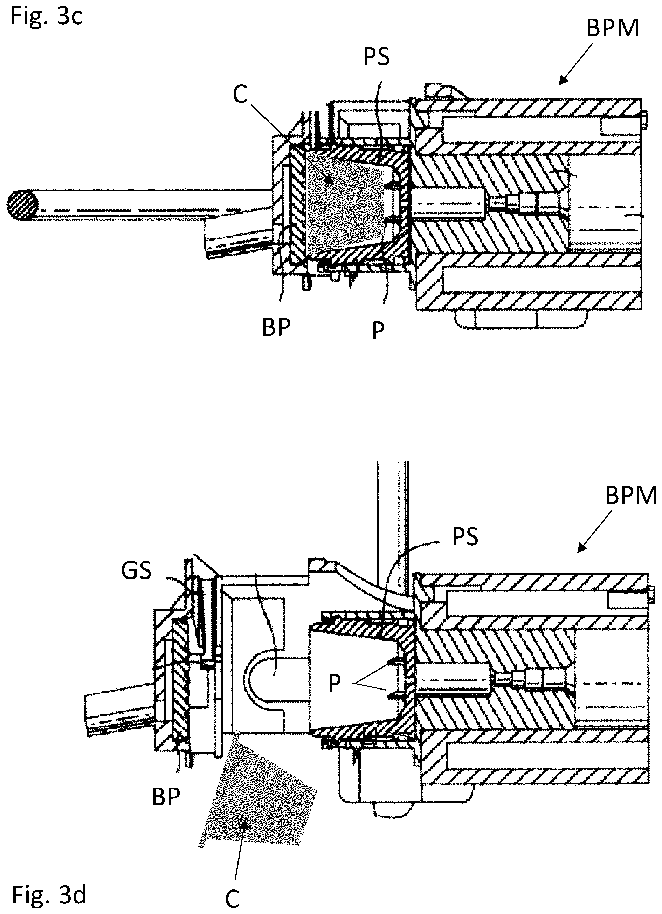

Fig. 3c and 4b show that the pressing sleeve PS has gotten pushed with a leading end against a back surface of the flange F which faces towards the base wall BW of the capsule C. At a same time the pressing sleeve PS then presses the foil closure disc FCD against the profiled back plate BP.

As is schematically shown in fig. 3c and 4b, the piercers P then have forced the base wall BW of the capsule C to deform inwards towards the base plate BP without the getting to penetrate through the base wall BW as the pressing sleeve PS moves forward to press on the flange F. The integrity of the base wall BW and side wall SW remains intact during the entire brewing cycle.

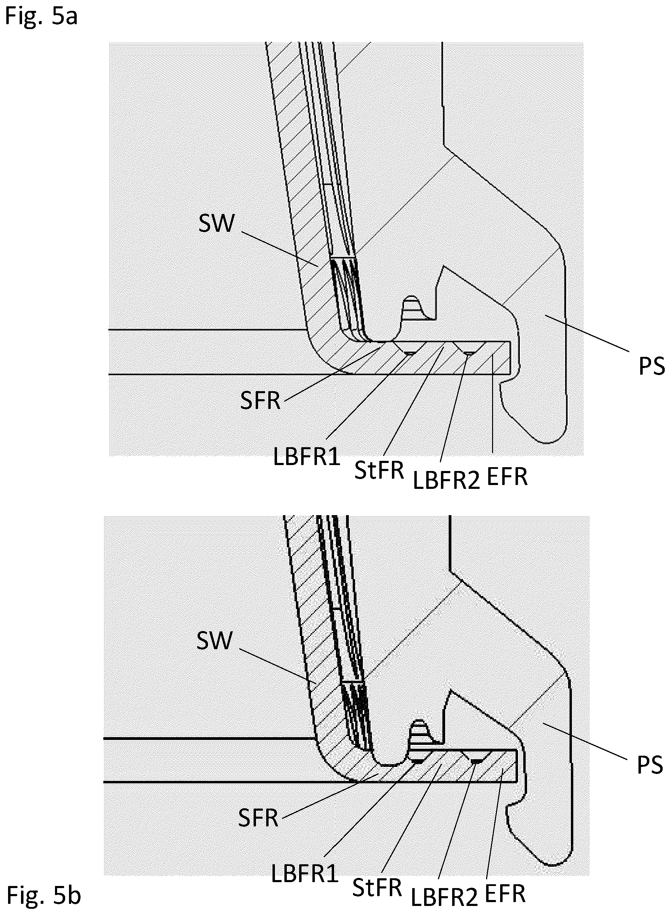

Fig. 5a shows the situation in which the leading end of the pressing sleeve PS has just gotten to lie against the flange F, whereas fig. 5b shows that the leading edge of the pressing sleeve PS has been pushed a little further to compress the sealing flange region SFR and get to lie sealing against it.

The machine then orders pressurized hot liquid L to enter and fill up the free space of the brewing chamber between the side wall SW and base wall BW of the capsule C and the pressing sleeve PS. This is shown in fig. 4b.

This liquid is injected into the free space of the brewing chamber at a pressure of, for example, 15-19 Bar, and is heated to a temperature, of for example, 95-98 degrees Celsius. The foil closure disc FCD has supported areas which lie against raised zones of the back plate BP, and has unsupported areas which span across depressions in the back plate BP.

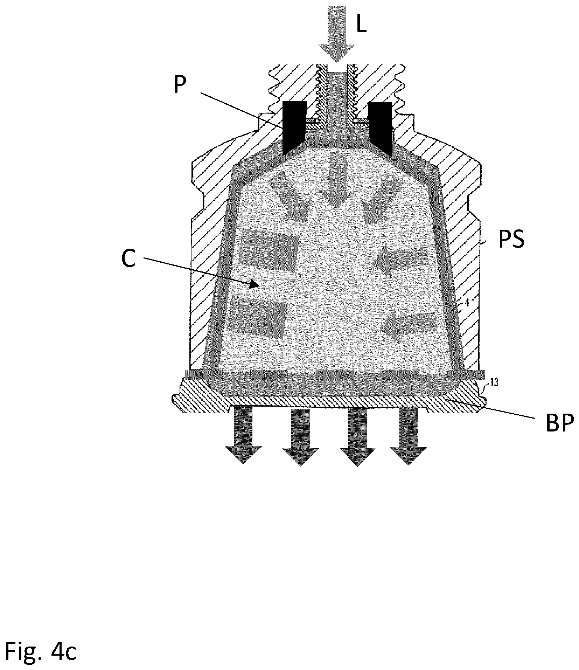

The pressurized liquid permeates through the semi-permeable paper-pulp side wall SW and base wall BW and thus arrives from all circumferential radial inwards directions through the entire side wall SW and in the axial inwards direction through the entire base wall BW inside the capsule body CB to interact there with the substance S stored inside the capsule C. The quickly rising liquid pressure inside the capsule C acting on the unsupported areas of the foil closure disc FCD causes them to burst permitting the beverage to flow out of the capsule C through perforated outlet openings which have thus been formed in the foil closure disc FCD. See fig. 4c.

All the time the pressurized liquid L is inside the brewing chamber, a part of it shall absorb into the sealing flange region SFR. Due to this the sealing flange region SFR may swell up somewhat, thus increasing the sealing effect. The pressurized liquid L however shall be unable to arrive all the way to the edge flange region EFR via absorption out of the sealing flange region SFR. This is efficiently blocked by the liquid-barrier flange regions LBFR1, LBFR2. Owing to this the outer edge flange region EFR is able to remain substantially dry during the entire brewing cycle.

Fig. 3d shows that at the end of the brewing cycle, the pressing sleeve PS gets released again to move back away from the base plate BP and thus release the capsule to freely drop down due to gravity. Since the edge flange region EFR has remained dry, it has remained its starting wall thickness t1 due to not swelling up, and has remained its starting strength for a release latch to be well able to exert a release force upon it. Also the dry outer edge flange region EFR shall not remain sticking to the guiding slits GS of the machine.

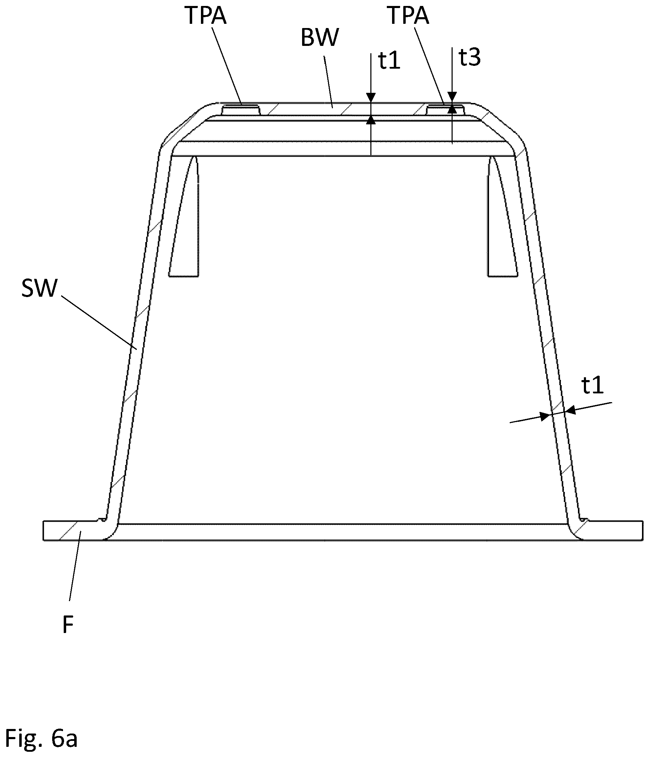

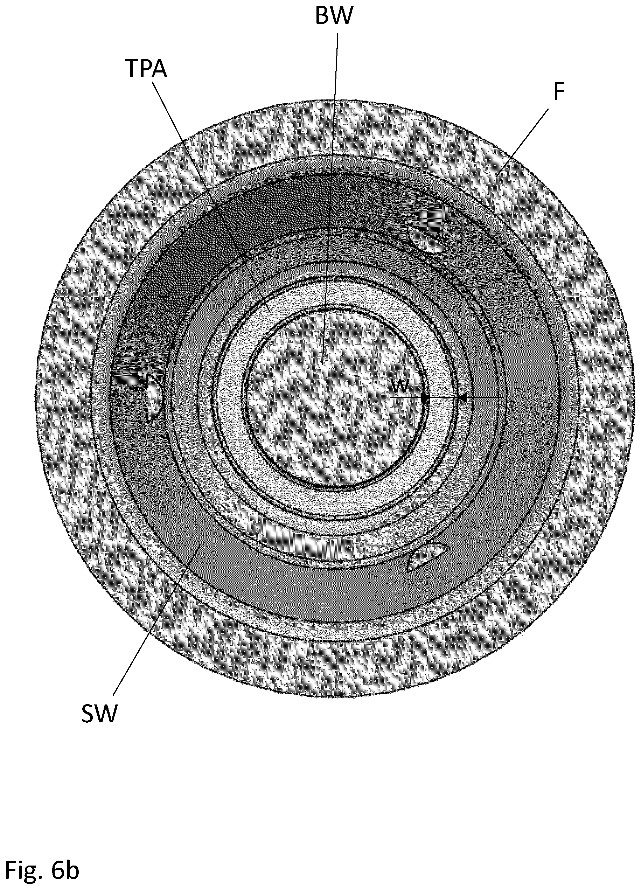

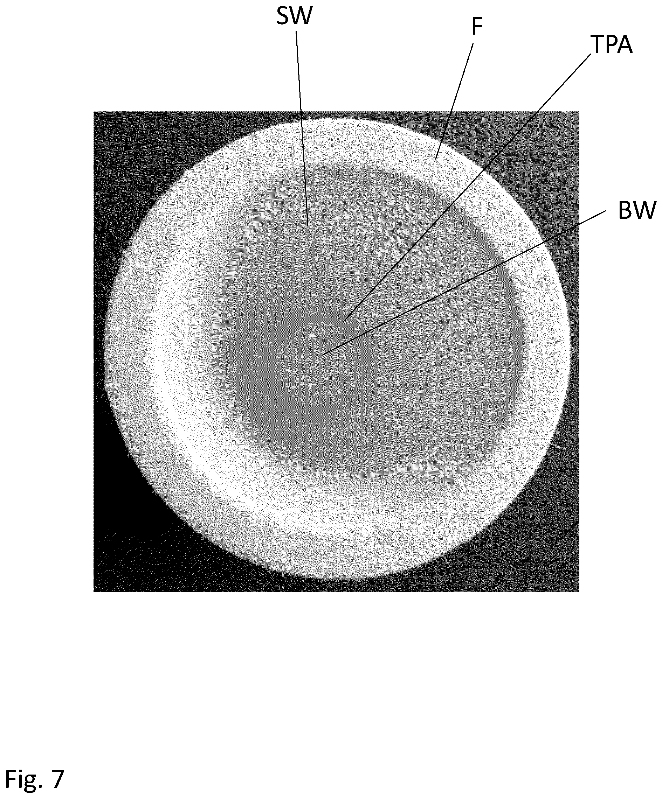

In fig. 6 and 7 a first variant is shown in which the base wall BW has been provided with a thin-walled ring-shaped target permeation area TPA. At the location of this target permeation area TPA in the base wall BW, the cellulose-fiber-based pulp material layer has been compacted to a reduced thickness t3 of less than 75% compared to the thickness t1 of the rest of the base wall BW and side wall SW. In particular the reduced thickness t3 here is about 0.15 mm, whereas the thickness t1 of the rest of the base wall BW is about 0.75 mm. The ring-shaped target permeation area TPA has a radial width w of about 2 mm and an inner diameter about 11 mm.

For obtaining the different degrees of wall thicknesses, the manufacturing method may still start with a wet forming step in which a layer of wet cellulose-fiber-based pulp material is suctioned against an upper mould that has been lowered into a bath filled with wet cellulose-fiber-based pulp material. The layer of wet cellulose-fiber-based pulp material sucked against the upper mould can then be uniform for the entire capsule body CB. During subsequent heat pressing steps, a lower mould is used that has a shape complementary to this foreseen first variant of the capsule body CB with its thin-walled ring-shaped target permeation area TPA. For that, the lower mould now also comprises a ring-shaped upwardly projecting area there where the ring-shaped target permeation area is to be made with its reduced wall-thickness in the base wall.

The result of this integrally manufacturing by means of the wet forming and heat pressing steps out of the wet cellulose-fiber-based pulp material, is that the ring-shaped target permeation area TPA has become such thin-walled compared to the rest of the walls, that despite the fact that the density of the cellulose-fiber-based pulp material at this ring-shaped target permeation area TPA at the same time has been compacted to a higher degree, pressurized liquid L, during a brewing cycle, shall more easily and quicker permeate through the walls at the location of the ring-shaped target permeation area TPA.

Due to the ring-shaped target permeation area TPA being provided at maximum distances from the exit side of the capsule, it can thus be guaranteed that the liquid L truly starts to permeate mostly through the ring-shaped target permeation area TPA in the base wall BW, and from there shall flow through the substance towards the aimed exit side at the location of the foil closure disc at a bottom of the capsule.

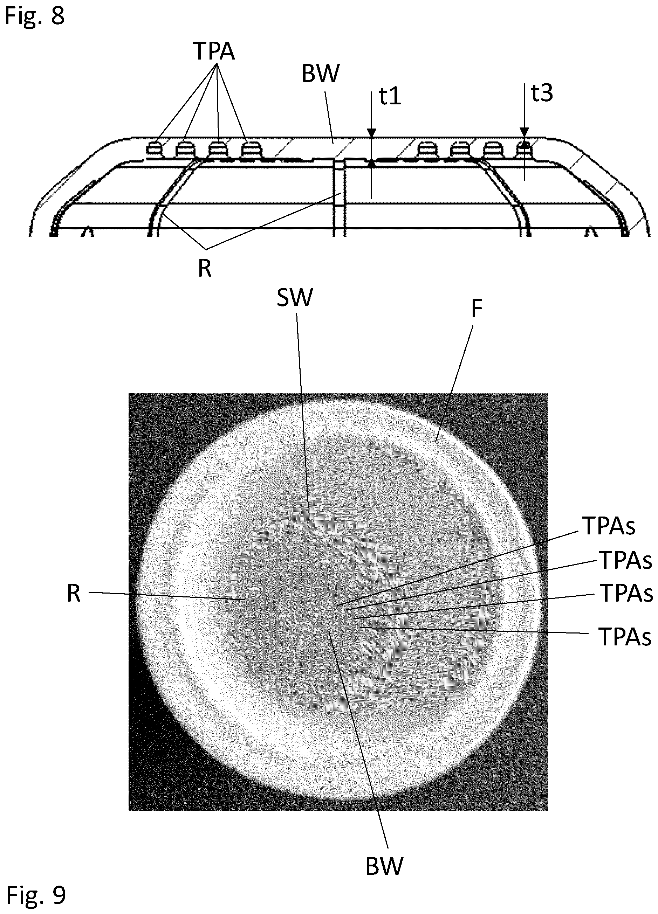

Fig. 8 and 9 show a second variant in which sets of thin-walled wedge-sector-shaped target permeation areas TPA of reduced wall thickness t3 are equipped in the base wall BW. Those thin-walled wedge-sector-shaped target permeation areas TPA are divided from each other by means of slender ribs R that have slightly thicker wall thickness than the wall thickness t1 of the rest of the base wall BW. The ribs R not only extend along the base wall BW but also along the side wall SW, such that also are able to form strengthening ribs there. Each thin-walled wedge-sector-shaped target permeation area TPA comprises a plurality of ring-segment-shaped sub-target permeation areas TPAs that lie at different radii from a centre axis of the capsule. Due to providing a larger amount of smaller dimensioned sub-target permeation areas TPAs lying at different radii, a further improved spreading of the liquid L permeating through the base wall BW can be achieved.

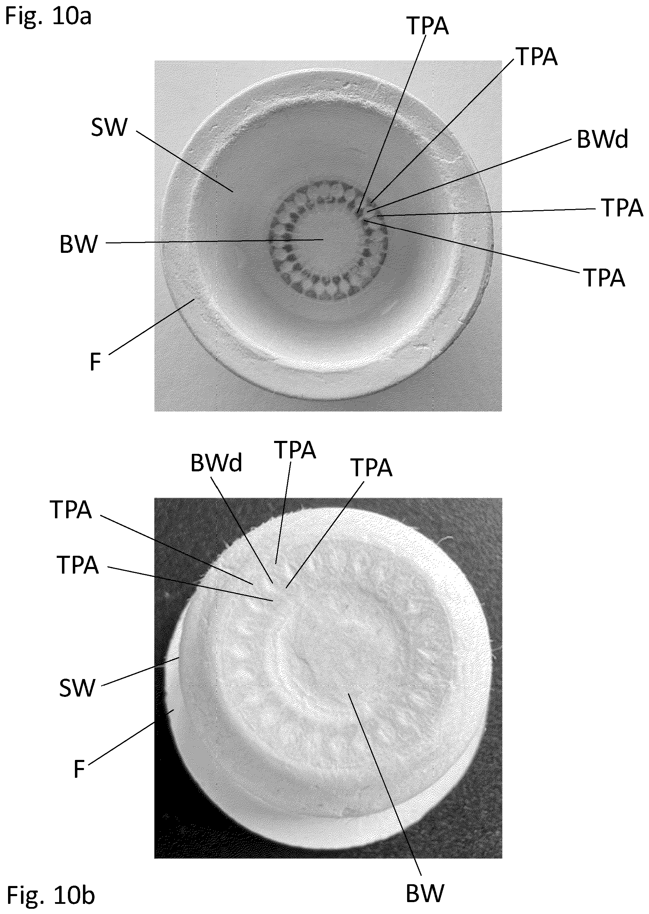

Fig. 10 shows a third variant in which an inner and outer ring of thin-walled dot-shaped target permeation areas TPA of reduced wall thickness are equipped in the base wall BW. Those rings of thin-walled dot-shaped target permeation areas TPA are divided from each other by means of dot-shaped base wall areas BWd that have substantially the same wall thickness t1 as the rest of the base wall BW. Each ring of thin-walled dot-shaped target permeation areas TPA lie at another radius from a centre axis of the capsule. Due to providing a larger amount of smaller dimensioned dot-shaped target permeation areas TPA lying at different radii, also an improved spreading of the liquid L permeating through the base wall BW can be achieved.

Besides the shown and described embodiments, numerous variants are possible. For example the dimensions and shapes of the various parts can be altered. The invention may advantageously be used not only for Nespresso-compatible capsules, but also for all kinds of other different capsule platforms. Instead of using paper-pulp other kinds of cellulose-fiber-based materials can also be used, like for example a combination of long fiber / short fiber / hard wood / soft wood/ mechanically engineered pulp. Instead of wet formed heat pressing, other manufacturing methods are also possible.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. A cellulose-fiber-based capsule (C) for containing a substance (S) from which a beverage can be produced, the capsule (C) being designed for insertion in a beverage production machine (BPM) in which pressurized liquid (L) enters the capsule (C) in order to interact with the substance (S) in the capsule (C) and to drain a beverage from the capsule (C), comprising:
- a cup-like capsule body (CB) that comprises:
∘ a circumferential side wall (SW);
∘ a transverse base wall (BW) at a first end of the side wall (SW); and
∘ a radially outwardly protruding flange (F) encircling the circumferential side wall (SW) at its second end,
wherein the side wall (SW), base wall (BW) and flange (F) are integrally made out of a same cellulose-fiber-based material,
wherein the integrally made cellulose-fiber-based material side wall (SW), base wall (BW) and flange (F) are substantially rigid in order for the capsule body (CB) to remain shape prior to insertion in the beverage production machine (BPM),
**characterized in that,**
the substantially rigid integrally made cellulose-fiber-based material side wall (SW) and base wall (BW) are semi-permeable for pressurized liquid (L) to pass through them while retaining the substance (S) in order for the side wall (SW) and base wall (BW) to act as a liquid-diffuser for the pressurized liquid (L) to permeate through the side wall (SW) and base wall (BW) into the substance (S) in the capsule (C).

2. A cellulose-fiber-based capsule according to claim 1, wherein the semi-permeable substantially rigid integrally made cellulose-fiber-based material side wall (SW), base wall (BW) and flange (F) are integrally made out of pulp, in particular paper-pulp.

3. A cellulose-fiber-based capsule according to one of the preceding claims, wherein the semi-permeable substantially rigid integrally made cellulose-fiber-based material side wall (SW) and base wall (BW) have a wall thickness (t1) of between 0.5-1 mm, in particular about 0.75 mm.

4. A cellulose-fiber-based capsule according to one of the preceding claims, wherein the semi-permeable substantially rigid integrally made cellulose-fiber-based material side wall (SW) and base wall (BW) are further configured to act as a filter for the pressurized liquid (L) during permeating thereof through the side wall (SW) and base wall (BW) into the substance (S) in the capsule (C).

5. A cellulose-fiber-based capsule according to one of the preceding claims, wherein the cellulose-fiber-based material flange (F) comprises:
• a radially inner ring-shaped sealing flange region (SFR),
wherein at least the sealing flange region (SFR) has same liquid absorption properties as the semi-permeable substantially rigid integrally made cellulose-fiber-based material base wall (BW) and side wall (SW).

6. A cellulose-fiber-based capsule according to claim 5, wherein the cellulose-fiber-based material at the location of the sealing flange region (SFR) is compacted to a same thickness (t1) and density as the semi-permeable substantially rigid integrally made cellulose-fiber-based material side wall (SW) and base wall (BW).

7. A cellulose-fiber-based capsule according to one of the preceding claims, wherein a foil closure disc (FCD) is directly adhered against a front surface of the substantially rigid integrally made cellulose-fiber-based material flange (F), in particular by means of a biodegradable/compostable hotmelt.

8. A cellulose-fiber-based capsule according to claim 7, wherein the foil closure disc (FCD) is made out of cellulose-fiber-based material, in particular paper.

9. A cellulose-fiber-based capsule according to one of the preceding claims, wherein the base wall (BW) and/or side wall (SW) are equipped with one or more target permeation areas (TPA), in particular of reduced wall thickness, that are each configured for the pressurized liquid (L) to more easily permeate through compared to through the rest of the base wall (BW) and side wall (SW).

10. A cellulose-fiber-based capsule according to claim 9, wherein a pattern of a plurality of said target permeation areas (TPA) is provided in at least the base wall (BW) and/or an upper part of the side wall (SW).

11. Method for manufacturing a cellulose-fiber-based capsule (C) according to one of the preceding claims 1-10, comprising the steps:
- integrally manufacturing the side wall (SW), base wall (BW) and flange (F) of the cup-like capsule body (CB) out of the same cellulose-fiber-based material,
wherein the cellulose-fiber-based material side wall (SW), base wall (BW) and flange (F) of the cup-like capsule body (CB) are integrally manufactured by means of wet forming out of pulp followed by one or more heat pressing steps, and
wherein the integrally manufacturing by means of the wet forming and heat pressing steps out of the pulp make the cellulose-fiber-based material side wall (SW), base wall (BW) and flange (F) substantially rigid in order for the capsule body (CB) to remain shape prior to insertion in the beverage production machine (BPM),
**characterized in that,**
the integrally manufacturing by means of the wet forming and heat pressing steps out of the pulp is configured to make the substantially rigid integrally made cellulose-fiber-based material side wall (SW) and base wall (BW) semi-permeable for the pressurized liquid (L) to pass through them while retaining the substance (S) in order for the cellulose-fiber-based material side wall (SW) and base wall (BW) to act as a liquid-diffuser for the pressurized liquid (L) to permeate through the side wall (SW) and base wall (BW) into the substance (S) in the capsule (C).

12. Method for manufacturing according to claim 11, wherein the integrally manufacturing by means of the wet forming and heat pressing steps out of the pulp is configured to equip the substantially rigid integrally made cellulose-fiber-based material base wall (BW) and/or side wall (SW) with one or more target permeation areas (TPA), in particular of reduced wall thickness, that are each configured for the pressurized liquid (L) to more easily permeate through compared to through the rest of the base wall (BW) and side wall (SW).

13. A beverage production assembly comprising:
- a cellulose-fiber-based capsule (C) according to one of the preceding claims 1-10 of which the cup-like capsule body (CB) contains substance (S) from which the beverage can be produced and that is closed by a foil closure disc (FCD) connected to the flange (F); and
- a beverage production machine (BPM) having:
∘ a pressing sleeve (PS) for sealing with the capsule (C); and
∘ means for feeding pressurized liquid (L), in particular heated liquid, to the capsule (C), wherein the pressing sleeve (PS) and the flange (F) are configured to come to lie sealing against each other during beverage production,
**characterized in that,**
the substantially rigid integrally made cellulose-fiber-based material side wall (SW) and base wall (BW) are semi-permeable for the pressurized liquid (L) to pass through them while retaining the substance (S) in order for the cellulose-fiber-based material side wall (SW) and base wall (BW) to act as a liquid-diffuser for the pressurized liquid (L) to permeate through the side wall (SW) and base wall (BW) into the substance (S) in the capsule (C).

14. A method for production of a beverage using the beverage production assembly according to claim 13, comprising the following steps:
- positioning the cellulose-fiber-based capsule (C) in the beverage production machine (BPM);
- feeding pressurized liquid (L) to the capsule (C) for interaction with the substance (S) inside the capsule (C), and draining a beverage from the capsule (C),
wherein the cellulose-fiber-based material side wall (SW) at its outwardly directed surface is in direct contact with the pressurized liquid (L) during beverage production, and
wherein the cellulose-fiber-based material flange (F) at its outwardly directed surface is sealed from direct contact with the pressurized liquid (L) during beverage production,
**characterized in that,**
the semi-permeable substantially rigid integrally made cellulose-fiber-based material side wall (SW) and base wall (BW) pass through the pressurized liquid (L) while retaining the substance (S) while the cellulose-fiber-based material side wall (SW) and base wall (BW) act as a liquid-diffuser for the pressurized liquid (L) to permeate through the side wall (SW) and base wall (BW) into the substance (S) in the capsule (C).

15. A method according to claim 14, wherein the semi-permeable substantially rigid integrally made cellulose-fiber-based material side wall (SW) and base wall (BW) do not get pierced by piercers (P) of the beverage production machine (PBM) during beverage production.
